# EUROPEAN PATENT APPLICATION

(11) **EP 4 563 261 A1**
(43) Date of publication of application: **04.06.2025**
(21) Application number: 23845917.6
(22) Date of filing: 05.04.2023
(51) Int. Cl.: B21D 51/26, B21D 22/02, B21D 22/28, B21D 43/05

(54) **CAN MANUFACTURING METHOD AND MANUFACTURING SYSTEM**

(30) Priority: 28.07.2022 JP 2022120500
(71) Applicant: Toyo Seikan Co., Ltd., Tokyo 141-8640 (JP)
(72) Inventor: OOHORI, Kei, Yokohama-shi, Kanagawa 230-0001 (JP); OSAFUNE, Tatsuya, Yokohama-shi, Kanagawa 230-0001 (JP); NAKAGAWA, Takanori, Yokohama-shi, Kanagawa 230-0001 (JP)
(74) Representative: Haseltine Lake Kempner LLP
(86) International application number: PCT/JP2023/014031
(87) International publication number: WO 2024/024177

(57) **Abstract**

The present invention is intended to provide a can manufacturing method and a can manufacturing system that can supply cans at low cost and with a short delivery time.

A can manufacturing method by deep drawing processing using a press machine, wherein a pre-step press machine, a post-step press machine, and a conveyor configured to convey a blank from the pre-step press machine to the post-step press machine are provided, the can manufacturing method including: first pressing for blank processing on a metal plate and coining processing to reduce a plate thickness of the blank by using the pre-step press machine; conveying the blank from the pre-step press machine to the post-step press machine; and second pressing for drawing processing and/or drawing and ironing processing to form a rectangular can by using the post-step press machine.

## Description

### Technical Field

The present invention relates to a can manufacturing method by deep drawing processing and to a can manufacturing system for deep drawing on a can.

### Background Art

In the related art, in deep drawing processing of a can, it is normal to use one press machine to perform a plurality of processing, such as blank processing of punching out a blank from a sheet metal and drawing processing of forming a bottomed cylindrical cup (see Patent Documents 1 and 2).

Generally, the one press machine is a dedicated press machine corresponding to the type and size of a product.

### Citation List

### Patent Literature

Patent Document 1: JP 2021-23942 A
Patent Document 2: JP 2003-275833 A

### Summary of Invention

### Technical Problem

A plurality of types of models corresponding to the types, sizes, and the like of cans are available as the press machine, and a dedicated press machine is designed and manufactured based on these models in accordance with a method and the like of a can manufacturer. However, it is not always possible to precisely set specifications in accordance with the method and the like of the can manufacturer, which may result in overspecification. Further, since the press machine is a dedicated press machine, it is difficult to repurpose the press machine for manufacture of other products, leading to increased costs in the manufacture of cans.

In addition, since it takes a considerable time to design and manufacture a dedicated press machine, there is also a drawback of extended delivery time.

Therefore, an object of the present invention is to provide a can manufacturing method and a can manufacturing system that can be supplied at low cost and with a short delivery time.

### Solution to Problem

A pre-step press machine, a post-step press machine, and a conveyor configured to convey a blank from the pre-step press machine to the post-step press machine are provided, and a can manufacturing method by deep drawing processing using a press machine according to the present invention includes: first pressing for blank processing on a metal plate and coining processing to reduce a plate thickness of the blank by using the pre-step press machine, conveying the blank from the pre-step press machine to the post-step press machine, and second pressing for drawing processing and/or drawing and ironing processing to form a rectangular can by using the post-step press machine.

In addition, a can manufacturing system by deep drawing processing using a press machine according to the present invention includes: a pre-step press machine, a post-step press machine, and a conveyor configured to convey a blank from the pre-step press machine to the post-step press machine, wherein the pre-step press machine is configured to perform blank processing on a metal plate and coining processing to reduce a plate thickness of the blank, and the post-step press machine is configured to form a rectangular can by drawing processing and/or drawing and ironing processing.

### Advantageous Effects of Invention

According to the present invention, with the above-described configuration, it is possible to construct a manufacturing system optimum for a product to be processed, a size thereof, and a processing step thereof, further to provide the manufacturing system at low cost, and to design and manufacture products in a short period of time.

Further, by using a general-purpose press machine, it is possible to relatively easily cope with a change in a type or size of a product to be processed.

### Brief Description of Drawings

FIG. 1 is a view illustrating a cell case forming step according to the present embodiment.
FIG. 2 is an explanatory side view of a manufacturing system 1 according to the present embodiment.
FIG. 3 is an explanatory top view of the manufacturing system 1 according to the present embodiment.

### Description of Embodiments

Hereinafter, embodiments of the present invention will be described with reference to the drawings. In the following description, the same reference symbols in different drawings denote elements having the same function, and redundant descriptions with regard to each drawing will be omitted as appropriate.

Hereinafter, embodiments of the present invention will be described with reference to the drawings.

### Embodiments

Hereinafter, in the present invention, an embodiment of a method of manufacturing cans, for example, rectangular cans such as cell cases of batteries such as lithium ion batteries, by deep drawing processing with a press machine and a manufacturing system used in the method will be described with reference to the drawings.

An embodiment of the present invention (hereinafter, referred to as 'present embodiment') is a manufacturing method and a manufacturing system for manufacturing cell cases of lithium ion batteries having rectangular opening portions.

### Manufacturing Step

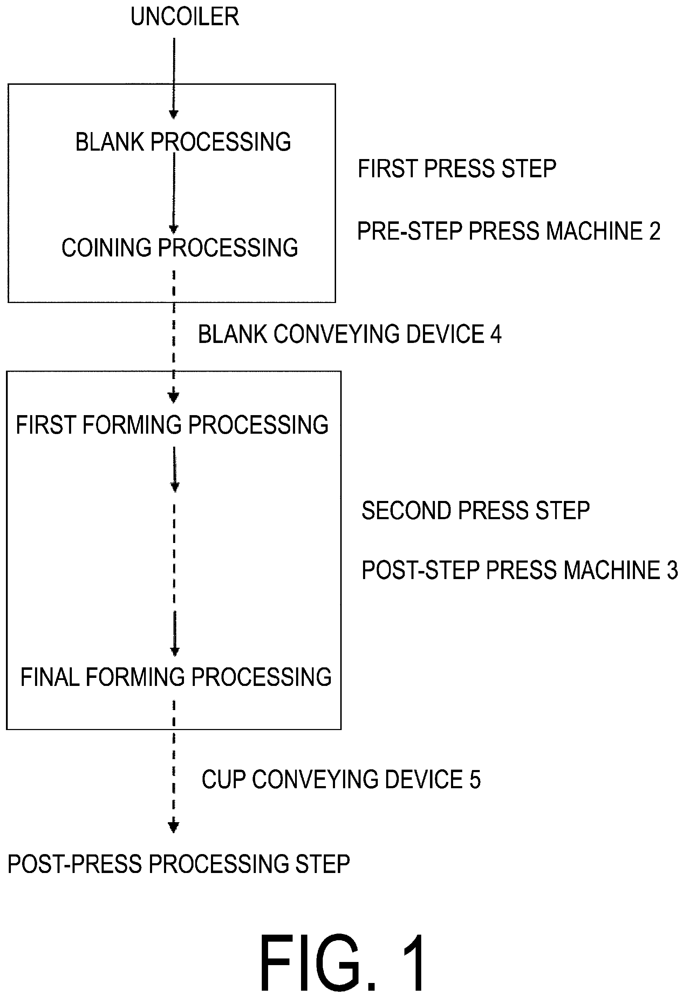

FIG. 1 is a view illustrating a cell case forming process according to the present embodiment.

A manufacturing step of the cell case in the present embodiment will be described with reference to FIG. 1.
(1) An uncoiler is a device that unwinds an aluminum sheet S wound in a coil shape, and supplies the unwound aluminum sheet S to a pre-step press machine 2.
(2) In the pre-step press machine 2, a first press step is performed. The first press step is a step of performing blank processing in the order of a blank processing step and a coining processing step.
(3) The blank processing step is a step of punching out a blank B having a flat shape, such as an elliptical shape or a complex R shape, from the aluminum sheet S unwound from the uncoiler for manufacturing a can by deep drawing processing. After the blank processing step, a step of finger-conveying the blank B to a next coining processing step is provided.
(4) The coining processing step is a step of pushing and crushing a portion of the blank B by a punch to reduce a plate thickness. In the present embodiment, the coining processing step is a step of performing coining processing on a portion to become a can bottom in a final shape of the can and/or a vicinity thereof to reduce a plate thickness. After the coining processing step, a step of finger-conveying the blank B to a blank conveying device 4 is provided.
(5) After performing blank processing and coining processing by the pre-step press machine 2, a conveying step of conveying the blank B to the post-step press machine 3 by the blank conveying device 4 is provided in order to perform processing by the post-step press machine 3.
(6) In the post-step press machine 3, a second press step is performed. The second press step is a step of processing the blank B into a final cup shape by a plurality of forming processing steps.
(7) The plurality of forming processing steps include a first forming processing step of performing drawing processing on a cup C having a flat shape, such as an elliptical shape or a complex R shape, and a final forming processing step of performing drawing processing on the cup C to have long side and short side dimensions of a final product. A step of, after each processing step, finger-conveying the cup C to a next processing step, that is, a cup conveying device 5 is provided.
   Note that a necessary forming processing step may be added between the first forming processing step and the final forming processing step. In addition, in each forming processing step, drawing processing or drawing and ironing processing can be selected as appropriate.
(8) After performing another forming processing step by the post-step press machine 3, a step of conveying the cup C (rectangular can) to a post-press processing step by the cup conveying device 5 is provided.
(9) The post-press processing step includes, as required, a cleaning step of removing lubricating oil and foreign matter adhering to the rectangular can, and an inspection/packaging step of performing appearance inspection of the completed rectangular can using a camera or the like and packaging a non-defective product that has passed the inspection.

Among the above-described steps, the blank processing step, the coining processing step, and each of the forming processing steps are performed by press machines.

Among the steps performed by the press machines, the press machine used in the blank processing step and the coining processing step may have a short stroke but needs a high pressing capacity, whereas the press machine used in each of the forming processing steps of performing drawing processing or drawing and ironing processing needs a long stroke but may have a low pressing capacity.

Therefore, assuming that the blank processing step and the coining processing step are performed by a common press machine, a general-purpose press machine having a short stroke and a high pressing capacity is selected as the pre-step press machine 2; and the forming processing steps are performed by another common press machine, a general-purpose press machine having a long stroke and a low pressing capacity is selected as the post-step press machine 3.

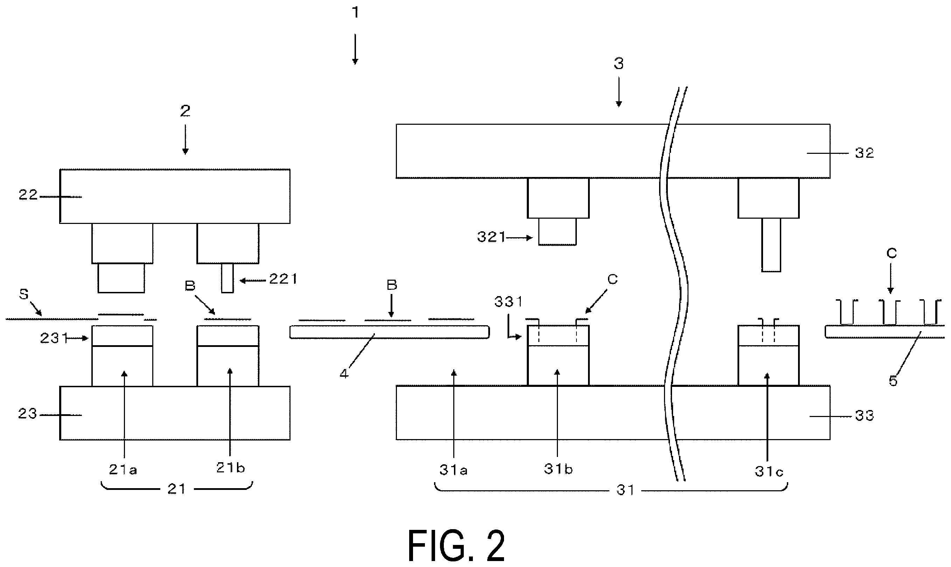

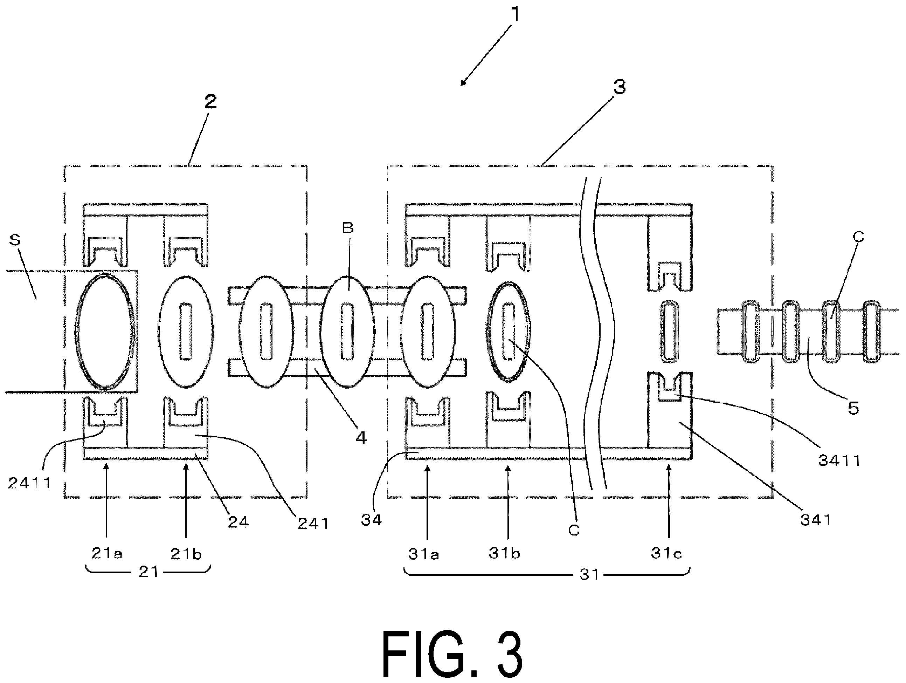

The pre-step press machine 2 and the post-step press machine 3 are connected together via the blank conveying device 4, and are combined with the cup conveying device 5 for carrying out the cup C from the post-step press machine 3, resulting in an arrangement as a series of manufacturing system 1 as illustrated in FIGS. 2 and 3.

### Manufacturing System

FIG. 2 is an explanatory side view of a manufacturing system 1 according to the present embodiment, and FIG. 3 is an explanatory top view.

The manufacturing system 1 including the pre-step press machine 2, the post-step press machine 3, the blank conveying device 4, and the cup conveying device 5 according to the present embodiment will be described with reference to FIGS. 2 and 3.

Although the pre-step press machine 2 and the post-step press machine 3 are so-called general-purpose press machines, the pre-step press machine is selected from general-purpose press machines having two processing stages, and the post-step press machine is selected from general-purpose press machines having a plurality of processing stages.

The pre-step press machine 2 includes, as a pre-step processing stage 21, a blank processing stage 21a and a coining processing stage 21b arranged in a row.

The pre-step processing stage 21 includes a punch 221 and a die 231, and the blank processing stage 21a and the coining processing stage 21b include a punch 221 and a die 231, respectively, facing each other. The two punches 221 are held by punch holders fixed on a slide 22 and arranged in a row at a predetermined interval, and the two dies 231 are held by die holders fixed on a bolster 23 and arranged in a row at a predetermined interval.

Further, the pre-step press machine 2 includes a transfer device 24 for conveying the blank B. The transfer device 24 is arranged so as to convey the blank B from the blank processing stage 21a and the coining processing stage 21b to the next coining processing stage 21b and the blank conveying device 4, respectively, and moves the blank B to the next coining processing stage 21b and the blank conveying device 4 every time the punch 221 moves up and down.

The post-step press machine 3 includes, as a post-step processing stage 31, a receiving stage 31a, a first forming processing stage 31b, and a final forming processing stage 31c arranged in a row. Note that a necessary forming processing stage may be added between the first forming processing stage 31b and the final forming processing stage 31c.

In the post-step processing stage 31, the first forming processing stage 31b and the final forming processing stage 31c include a punch 321 and a die 331, respectively, facing each other. The three punches 321 are held by punch holders fixed on a slide 32 and arranged in a row at predetermined intervals, and the three dies are held by die holders fixed on a bolster 33 and arranged in a row at predetermined intervals.

A terminal end portion of the blank conveying device 4 is arranged at the receiving stage 31a, where a configuration of the first processing stage originally included in the general-purpose press machine has been removed.

In addition, the post-step press machine 3 includes a transfer device 34 for conveying the blank B or the cup C. The transfer device 34 is arranged so as to convey the blank B or the cup C from the receiving stage 31a, the first forming processing stage 31b, and the final forming processing stage 31c to the next first forming processing stage 31b, the final forming processing stage 31c, and the cup conveying device 5, respectively, and moves the blank B or the cup C to the next first forming processing stage 31b, the final forming processing stage 31c, and the cup conveying device 5 every time the punch 321 moves up and down.

### Transfer Device

As illustrated in FIG. 3, as the transfer device 24 provided in the pre-step press machine 2, a pair of fingers 241 are disposed to face each other on each of the blank processing stage 21a and the coining processing stage 21b. The two pairs of fingers 241 are integrally connected and are driven in synchronization with the vertical movement of the punches 221. The pair of fingers 241 grip the blank B and move the blank to the next coining processing stage 21b and the blank conveying device 4.

In addition, as the transfer device 34 provided in the post-step press machine 3, a pair of fingers 341 are disposed to face each other on each of the receiving stage 31a, the first forming processing stage 31b, and the final forming processing stage 31c. The plurality of pairs of fingers 341 are integrally connected and are driven in synchronization with the vertical movement of the punches 321. The pair of fingers 341 grip the blank B and the cup C and move the same to the next first forming processing stage 31b, the final forming processing stage 31c, and the cup conveying device 5.

The fingers 241 and 341 grip the flat blank B having a flat shape and the cup C so as to sandwich the blank B and the cup C from both sides in a longitudinal direction. Thus, a conveying pitch can be shortened, and the cup C can be prevented from being deformed by the gripping force.

Of the fingers 241 and 341, contact portions 2411, 3411 that come into contact with the blank B or the cup C are made of a material, such as a resin material or a rubber material, which does not easily scratch the blank B or the cup C made of aluminum. Since the blank B and the cup C are heated by the press processing, the contact portions 2411 and 3411 are required to have predetermined heat resistance, and are also required to have durability such as wear resistance because they repeatedly hold and release the blank B and the cup C. In consideration of those points, the material is appropriately selected from polyamide-imide, polyacetal, monomer-cast nylon, fluororesin, polyetheretherketone, fluororubber, silicone rubber, ethylene propylene rubber, acrylic rubber, and the like. In addition, the heat-resistant temperature is preferably 100°C or higher, and more preferably 150°C or higher.

### Variations

Although the manufacturing system 1 of the present embodiment has been described above, the configuration is not limited to this example, and various variations are conceivable.
(1) The manufacturing system 1 of the present embodiment is constituted by two general-purpose press machines of the pre-step press machine 2 and the post-step press machine 3, but is not limited thereto, and may be constituted by three or more general-purpose press machines. In this case, an optimum general-purpose press machine is selected from the general-purpose press machines having different pressing capacities, strokes, the number of processing stages, and the like.
   Further, even when the pressing capacity and stroke required for each processing step are approximately the same, if the number of processing stages is large, instead of using one dedicated press machine, a plurality of general-purpose press machines may be connected to constitute a manufacturing system.
(2) In the manufacturing system 1 of the present embodiment, the pre-step press machine 2 having a high pressing capacity and a short stroke and the post-step press machine 3 having a low pressing capacity and a long stroke are combined, but any combination other than this combination may be used.
(3) In the manufacturing system 1 of the present embodiment, the pre-step press machine 2 performs the blank processing and the coining processing, and the post-step press machine 3 performs a plurality of forming processing. However, the processing performed by each press machine and the order in which the processing is performed can be appropriately designed according to a specific forming processing process such as a type, a shape, and a size of a product to be manufactured.

For example, the pre-step press machine 2 does not need to include the coining processing stage 21b, and the blank processing stage 21a may simply punch out the blank or may perform both blank punching and drawing processing using a punch.

Further, in the post-step press machine 3, in addition to the first forming processing stage 31b and the final forming processing stage 31c for performing drawing processing, a necessary number of forming processing stages may be arranged in the middle. In addition, it is also possible to add other necessary processing stages such as a reforming step, a step processing step, and a lubricating oil applying step to arbitrary positions.

(4) Although the manufacturing system 1 of the present embodiment processes the cell cases of the lithium ion batteries made of aluminum, the manufacturing system 1 is not limited to the cell cases, and may process any other types of aluminum cans. In addition, any types of cases or cans made of other metal such as stainless steel may be processed, or any types of cases or cans having a laminated structure in which metal is coated with a resin or the like may be processed.
(5) The manufacturing system 1 of the present embodiment manufactures cans having rectangular opening portions. Alternatively, cans having square opening portions or cans having other shapes not limited to quadrangular shapes such as circular cans, and elliptical cans may be manufactured.

### Other Embodiments of Invention

(1) A can manufacturing method by deep drawing processing using a press machine, wherein
   a pre-step press machine, a post-step press machine, and a conveyor configured to convey a blank from the pre-step press machine to the post-step press machine are provided, the can manufacturing method including:
   first pressing for blank processing on a metal plate and coining processing to reduce a plate thickness of the blank by using the pre-step press machine,
   conveying the blank from the pre-step press machine to the post-step press machine, and
   second pressing for drawing processing and/or drawing and ironing processing to form a rectangular can by using the post-step press machine.
(2) The can manufacturing method according to the above (1), wherein a stroke of the pre-step press machine is shorter than a stroke of the post-step press machine.
(3) The can manufacturing method according to the above (1) or (2), wherein a pressing capacity of the pre-step press machine is higher than a pressing capacity of the post-step press machine.
(4) The can manufacturing method according to any one of the above (1) to (3), wherein
   the pre-step press machine includes a finger configured to convey the blank formed by the blank processing, and
   the blank processing is performed prior to the coining processing in the first pressing, the first pressing including,
   finger-conveying the blank formed by the blank processing in the pre-step press machine.
(5) The can manufacturing method according to any one of the above (1) to (4), wherein
   the post-step press machine includes a finger configured to convey a formed product obtained by drawing processing and/or drawing and ironing processing on the blank, and
   the finger includes a contact portion made of a resin material or a rubber material and is configured to grip and convey the formed product by the contact portion.
(6) The can manufacturing method according to any one of the above (1) to (5), wherein the can is an aluminum can.
(7) A can manufacturing system by deep drawing processing using a press machine, the can manufacturing system including:
   a pre-step press machine, a post-step press machine, and a conveyor configured to convey a blank from the pre-step press machine to the post-step press machine, wherein
   the pre-step press machine is configured to perform blank processing on a metal plate and coining processing to reduce a plate thickness of the blank, and
   the post-step press machine is configured to form a rectangular can by drawing processing and/or drawing and ironing processing.
(8) The can manufacturing system according to the above (7), wherein a stroke of the pre-step press machine is shorter than a stroke of the post-step press machine.
(9) The can manufacturing system according to the above (7) or (8), wherein a pressing capacity of the pre-step press machine is higher than a pressing capacity of the post-step press machine.
(10) The can manufacturing system according to any one of the above (7) to (9), wherein the pre-step press machine is configured to perform the blank processing prior to the coining processing, and includes a finger configured to convey the blank formed by the blank processing in the pre-step press machine.
(11) The can manufacturing system according to any one of the above (7) to (10), wherein
   the post-step press machine includes a finger configured to convey a formed product obtained by drawing processing and/or drawing and ironing processing on the blank, and
   a contact portion of the finger that contacts with the formed product is made of a resin material or a rubber material.
(12) The can manufacturing system according to any one of the above (7) to (11), wherein the can is an aluminum can.

Although the embodiments according to the present invention have been described in detail with reference to the drawings, the specific configurations are not limited to those embodiments, and design changes and the like without departing from the gist of the present invention are also included in the present invention.

In addition, the above-described embodiments can be combined with each other by applying techniques to each other as long as there is no particular contradiction or problem in the purpose, configuration, and the like.

### Reference Symbol List

1: Manufacturing system
2: Pre-step press machine
21: Pre-step processing stage
21a: Blank processing stage
21b: Coining processing stage
22: Slide
221: Punch
23: Bolster
231: Die
24: Transfer device
241: Finger
2411: Contact portion
3: Post-step press machine
31: Post-step processing stage
31a: Receiving stage
31b: First forming processing stage
31c: Final forming processing stage
32: Slide
321: Punch
33: Bolster
331: Die
34: Transfer device
341: Finger
3411: Contact portion
4: Blank conveying device
5: Cup conveying device
B: Blank
C: Cup
S: Aluminum sheet

## Claims

1. A can manufacturing method by deep drawing processing using a press machine, wherein a pre-step press machine, a post-step press machine, and a conveyor configured to convey a blank from the pre-step press machine to the post-step press machine are provided, the can manufacturing method including:
first pressing for blank processing on a metal plate and coining processing to reduce a plate thickness of the blank by using the pre-step press machine;
conveying the blank from the pre-step press machine to the post-step press machine; and
second pressing for drawing processing and/or drawing and ironing processing to form a rectangular can by using the post-step press machine.

2. The can manufacturing method according to claim 1, wherein a stroke of the pre-step press machine is shorter than a stroke of the post-step press machine.

3. The can manufacturing method according to claim 1, wherein a pressing capacity of the pre-step press machine is higher than a pressing capacity of the post-step press machine.

4. The can manufacturing method according to any one of claims 1 to 3, wherein
the pre-step press machine comprises a finger configured to convey the blank formed by the blank processing, and
the blank processing is performed prior to the coining processing in the first pressing, the first pressing including finger-conveying the blank formed by the blank processing in the pre-step press machine.

5. The can manufacturing method according to any one of claims 1 to 3, wherein
the post-step press machine comprises a finger configured to convey a formed product obtained by drawing processing and/or drawing and ironing processing on the blank, and
the finger comprises a contact portion made of a resin material or a rubber material and is configured to grip and convey the formed product by the contact portion.

6. The can manufacturing method according to any one of claims 1 to 3, wherein the can is an aluminum can.

7. A can manufacturing system by deep drawing processing using a press machine, the can manufacturing system comprising:
a pre-step press machine, a post-step press machine, and a conveyor configured to convey a blank from the pre-step press machine to the post-step press machine, wherein
the pre-step press machine is configured to perform blank processing on a metal plate and coining processing to reduce a plate thickness of the blank, and
the post-step press machine is configured to form a rectangular can by drawing processing and/or drawing and ironing processing.

8. The can manufacturing system according to claim 7, wherein a stroke of the pre-step press machine is shorter than a stroke of the post-step press machine.

9. The can manufacturing system according to claim 7, wherein a pressing capacity of the pre-step press machine is higher than a pressing capacity of the post-step press machine.

10. The can manufacturing system according to any one of claims 7 to 9, wherein the pre-step press machine is configured to perform the blank processing prior to the coining processing, and comprises a finger configured to convey the blank formed by the blank processing in the pre-step press machine.

11. The can manufacturing system according to any one of claims 7 to 9, wherein
the post-step press machine comprises a finger configured to convey a formed product obtained by drawing processing and/or drawing and ironing processing on the blank, and
a contact portion of the finger that contacts with the formed product is made of a resin material or a rubber material.

12. The can manufacturing system according to any one of claims 7 to 9, wherein the can is an aluminum can.
